# EUROPÄISCHE PATENTANMELDUNG

(11) **EP 1 203 695 A2**
(43) Veröffentlichungstag der Anmeldung: **08.05.2002**
(21) Anmeldenummer: 01125958.7
(22) Anmeldetag: 31.10.2001
(51) Int. Cl.: B60Q 1/115

(54) **Verfahren und Vorrichtung zur Leuchtweitenregelung der Scheinwerfer eines Kraftfahrzeuges**

(30) Priorität: 04.11.2000 DE 10054606
(71) Anmelder: Hella KG Hueck & Co., 59552 Lippstadt (DE)
(72) Erfinder: Kasprzok, Ralf, 33428 Harsewinkel (DE); Marek, Karsten, 59494 Soest (DE)

(57) **Zusammenfassung**

Die vorliegende Erfindung bezieht sich auf ein Verfahren zur Leuchtweitenregelung der Scheinwerfer eines Kraftfahrzeugs, bei dem die Karosserieneigung des Fahrzeugs relativ zur Fahrbahn erfaßt wird und die Scheinwerfer (2) zur Regelung der Leuchtweite (LW) entgegen des gemessenen Karosserieneigungswinkels (α) relativ zur Karosserie (1) winkelverstellt werden. Um die Regelcharakteristik zu verbessern, wird erfindungsgemäß vorgeschlagen, daß die bei einer Karosserieneigung auftretende Änderung der Anbauhöhe (Δh) der Scheinwerfer (2) relativ zur Fahrbahnoberfläche erfaßt wird und die Scheinwerfer (2) in Abhängigkeit von dem Anbauhöhenmeßwert (H - Δh) relativ zur Karosserie Winkel verstellt werden. Eine Leuchtweitenregelungseinrichtung zur Durchführung dieses Verfahrens ist ebenfalls Gegenstand der Erfindung.

## Beschreibung

Die vorliegende Erfindung bezieht sich auf ein Verfahren zur Leuchtweitenregelung der Scheinwerfer eines Kraftfahrzeugs, bei dem die Karosserieneigung des Fahrzeugs relativ zur Fahrbahn erfaßt wird und die Scheinwerfer zur Regelung der Leuchtweite entgegen des gemessenen Karosserieneigungswinkels relativ zur Karosserie winkelverstellt werden. Eine entsprechende Leuchtweitenregelungseinrichtung für Scheinwerfer eines Kraftfahrzeugs ist ebenfalls Gegenstand der Erfindung.

Bei der dynamischen Leuchtweitenregelung der Scheinwerfer eines Kraftfahrzeugs wird berücksichtigt, daß in Abhängigkeit von jeweiligen Fahr- und Belastungszustand des Fahrzeugs eines Neigung der Fahrzeugkarosserie relativ zur Fahrbahnebene auftritt. Im einzelnen wird die Karosserie bei stärkerer Beschleunigung sowie bei höherer Beladung im Heckbereich bezüglich einer Fahrzeugquerachse entgegen der Fahrtrichtung nach hinten geneigt und umgekehrt beim Abbremsen und beim Gangwechsel nach vorne. Dadurch ändert sich ebenfalls der Abstrahlwinkel des von den Scheinwerfern abgegebenen Lichtkegels relativ zum Untergrund, d. h. die Leuchtweite.

Um die Leuchtweitenschwankungen durch Karosserieneigungsänderungen auszugleichen, ist beispielsweise aus der EP 0 355 539 B1 ein Verfahren und eine Einrichtung zur Leuchtweitenregelung bekannt, bei dem über Neigungssensoren an der Fahrzeugkarosserie fortlaufend die Karosserieneigung gemessen wird und über daran angeschlossene Steuer- und Regeleinrichtungen ein Sollwert zur Winkelverstellung der Scheinwerfer gebildet wird, auf den diese mittels geeigneter Scheinwerfer-Stelleinrichtungen eingestellt werden. Dadurch werden die in der Regel im Bereich der Fahrzeugfront angebrachten Fahrzeugscheinwerfer entgegen den Karosserieneigungsänderungen ebenfalls um eine Fahrzeugquerachse verdreht. Durch diese dynamisch erfolgende Winkelverstellung wird erreicht, daß der Lichtkegel der Scheinwerfer mit im wesentlichen gleichbleibendem Abstrahlwinkel relativ zur Fahrbahn abgestrahlt wird. Diese dynamische Ausregelung von Fahrzeugneigung und Scheinwerfereinstellung hat den Vorteil, daß die Leuchtweite für unterschiedliche Fahrzustände und Fahrzeugbelastungen vergleichmäßigt wird.

Nachteilig an den bekannten Verfahren zur dynamischen Leichtweitenregelung ist jedoch, daß durch die Verstellung der Scheinwerfer lediglich Änderungen des Karosserieneigungswinkels, des sogenannten Nickwinkels ausgeregelt werden. Dabei bleibt jedoch unberücksichtigt, daß die Fahrzeugscheinwerfer bei einer Karosserieneigungsänderung nicht nur um den Nickwinkel nach vorn oder hinten verkippt werden, sondern zusätzlich eine Translationsbewegung relativ zur Fahrbahnoberfläche auftritt. Wird beispielsweise das Fahrzeug stark abgebremst, taucht die Fahrzeugfront nach unten in Richtung auf die Fahrbahnoberfläche ein, so daß die sogenannte Anbauhöhe, daß ist der vertikale Abstand zwischen dem Scheinwerfer und der Fahrbahnoberfläche, ebenfalls verringert wird. Dadurch wird die Leuchtweite weiter verringert, als es allein der Änderung des Karosserieneigungswinkels entnehmbar ist. Dadurch kommt es zu Sichtweitenverlusten, welche durch die dynamische Leuchtweitenregelungen nach dem Stand der Technik nicht kompensiert werden. Dies ist ebenfalls bei stärkerer Beschleunigung der Fall, so daß es trotz dynamischer Leuchtweitenregelung mitunter zu einer Blendung des Gegenverkehrs kommen kann. Zusätzliche Beeinträchtigungen können durch einen abweichenden Beladungszustand des Kraftfahrzeugs auftreten, welche durch bekannte Leuchtweitenregelungen ebenfalls nicht berücksichtigt werden.

Angesichts der vorgenannten Problematik liegt der vorliegenden Erfindung die Aufgabe zugrunde, ein Verfahren zur Leuchtweitenregelung anzugeben, welches eine verbesserte Regelcharakteristik hat.

Zur Lösung der vorgenannten Problematik sieht das erfindungsgemäße Verfahren zur Leuchtweitenregelung vor, daß die bei einer Karosserieneigung auftretende Änderung der Anbauhöhe der Scheinwerfer relativ zur Fahrbahnoberfläche erfaßt wird und die Scheinwerfer in Abhängigkeit von dem Anbauhöhenmeßwert winkelverstellt werden.

Die Besonderheit des erfindungsgemäßen Verfahrens besteht darin, daß nicht nur, wie im Stand der Technik, der Neigungswinkel der Karosserie mit in die Regelung einbezogen wird, sondern darüber hinaus die Translationsbewegung der Scheinwerfer relativ zum Untergrund. Hierzu sieht das erfindungsgemäße Verfahren vor, daß der Karosserieneigungswinkel wie bei den bekannten Leuchtweitenregelungen durch eine entgegengesetzte Drehung der Scheinwerfer relativ zur Karosserie kompensiert wird. Beim erfindungsgemäßen Verfahren erfolgt darüber hinaus eine zusätzliche Winkelverstellung der Scheinwerfer zur Kompensation der veränderten Anbauhöhe. Wenn beispielsweise beim starken Abbremsen das Fahrzeug um einen bestimmten Nickwinkel quer zur Fahrzeugachse nach vorn verkippt wird, werden die Scheinwerfer um den Betrag dieses Nickwinkels um ihre ebenfalls quer zum Fahrzeug liegende Verstellachse nach oben verdreht und zusätzlich um einen weiteren Korrekturwinkel, der sich daraus ergibt, daß die Scheinwerfer nach unten gegen die Fahrbahnoberfläche bewegt werden, also eine geringere Anbauhöhe haben.

Dank der Erfindung ist es erstmals möglich, die mit Karosserieneigungsänderungen einhergehenden Anbauhöhenänderungen ebenfalls in die Leuchtweitenregelung mit einzubeziehen und auf diese Weise für eine weitere Vergleichmäßigung der Leuchtweite zu sorgen. Dadurch ergibt sich sowohl ein Sichtweitegewinn bei Vollbremsungen, als auch eine Vermeidung der Blendung des Gegenverkehrs bei extremen Beschleunigungsvorgängen. Daraus resultiert als wesentlicher Vorteil ein erheblicher Sicherheitsgewinn, und zwar für sämtliche beteiligte Verkehrsteilnehmer.
Vorteilhaft bei der erfindungsgemäßen Auswertung der Anbauhöhe der Scheinwerfer ist weiterhin, daß ein abweichendes dynamisches Verhalten der Karosserieneigung in Abhängigkeit vom jeweiligen Beladungszustand ebenfalls ohne zusätzliche Maßnahmen von der Leuchtweitenregelung erfaßt wird. Im Stand der Technik wird der Beladungszustand bislang ebenfalls lediglich anhand des Karosserieneigungswinkels abgeschätzt und eine entsprechende Scheinwerferverstellung vorgenommen. Diesbezüglich wird durch die erfindungsgemäße Leuchtweitenregelung ebenfalls ein merklicher Sicherheitsgewinn realisiert.

Durch das erfindungsgemäße Verfahren wird erstmals dem Umstand Rechnung getragen, daß Karosserieneigungsänderungen aufgrund von unterschiedlichen Fahrzuständen und/oder Fahrzeugbeladungen zwar eine Drehbewegung der Karosserie um einen Neigungswinkel beinhalten, die Drehachse dieser Neigung jedoch in Abhängigkeit der wirkenden Kräfte und Drehmomente unterschiedlich sein kann und in der Praxis nicht mit der Verstellachse der Scheinwerfer zusammenfällt. Dadurch, daß erfindungsgemäß zusätzlich zur Neigung die räumliche Position der Scheinwerfer als Anbauhöhenmeßwert in die Leuchtweitenregelung mit einbezogen wird, kann somit eine bessere Regelcharakteristik als im Stand der Technik ermöglicht werden.

Vorzugsweise wird der Anbauhöhenmeßwert mit einer Anbauhöhenmeßeinrichtung gemessen. Diese kann beispielsweise einen Achssensor umfassen. Mit diesem Achssensor, der bevorzugt an der Vorderachse des Fahrzeugs angebracht ist, kann mit relativ geringem Aufwand und ausreichender Genauigkeit der vertikale Abstand der Karosserie zur Achse bzw. zum Rad ermittelt werden, welcher bis auf eine additive Konstante der Anbauhöhe der Scheinwerfer entspricht. Derartige Achssensoren sind im Stand der Technik bereits bekannt. Dort werden sie jedoch lediglich als Differenzsensoren zur Ermittlung der Karosserieneigung verwendet. Dagegen werden sie erfindungsgemäß zur Absolutwertmessung der Anbauhöhe eingesetzt.

Zur Umsetzung des erfindungsgemäßen Leuchtweitenregelungsverfahrens kann aus dem Anbauhöhenmeßwert ein Korrekturwert für die Sollwertberechnung der Winkelverstellung der Scheinwerfer gebildet werden. Dabei kann im einzelnen vorgesehen werden, daß zum Ausgleich des Karosserieneigungswinkels ein Sollwert für die Winkelverstellung der Scheinwerfer ermittelt wird, welcher gemäß der momentan ermittelten Anbauhöhe korrigiert wird. Auf diese Weise kann sowohl die Karosserieneigung als auch eine auftretende Anbauhöhendifferenz durch eine angepaßte Winkelverstellung der Scheinwerfer zugunsten einer gleichbleibenden Leuchtweite ausgeglichen werden.

Eine erfindungsgemäße Einrichtung zur Regelung der Leuchtweite von Scheinwerfern eines Kraftfahrzeugs umfaßt Sensoreinrichtungen zur Messung des Karosserieneigungswinkels (Nickwinkels) relativ zur Fahrbahn, Steuereinrichtungen zur Sollwertberechnung der Winkelverstellung der Scheinwerfer in Abhängigkeit von den Sensormeßwerten und Scheinwerferstelleinrichtungen, von denen die Scheinwerfer auf die von den Steuereinrichtungen berechneten Sollwerte relativ zur Karosserie winkelverstellbar sind. Zur Umsetzung des vorangehend erläuternden erfindungsgemäßen Verfahrens ist bei einer derartigen Einrichtung vorgesehen, daß die Sensoreinrichtungen eine Anbauhöhenmeßeinrichtung umfassen, mit der die Anbauhöhe der Scheinwerfer über der Fahrbahnoberfläche meßbar ist, wobei die Steuereinrichtungen mit der Anbauhöhenmeßeinrichtung verbunden sind und die gemessene Anbauhöhe zusätzlich in den Sollwert der Winkelverstellung der Scheinwerfer einbeziehbar ist.

Die erfindungsgemäße Einrichtung hat, wie dies im Stand der Technik bekannt ist eine Regeleinrichtung, welche anhand der Meßdaten von Sensoreinrichtungen, nämlich Neigungssensoren, einen Sollwert für die Verstellung der Scheinwerfer errechnet und über entsprechende Stellglieder die Einstellung der Scheinwerfer vornimmt. Während jedoch im Stand der Technik für die Berechnung der Sollwerte lediglich Karosserieneigungswinkel berücksichtigt werden, gibt die erfindungsgemäße Einrichtung erstmals die Möglichkeit, die räumliche Positionierung des Scheinwerfers, d. h. die senkrechte Translation der Scheinwerfer bei einer erfolgenden Karosserieneigung ebenfalls zu berücksichtigen und durch eine entsprechende Winkelverstellung der Scheinwerfer ebenfalls auszugleichen.

Die Anbauhöhenmeßeinrichtung kann einen Achssensor umfassen, von dem der vertikale Abstand zwischen Karosserie und Fahrzeugachse meßbar ist. Dadurch, daß der Abstand von der Fahrzeugachse zur Fahrbahnoberfläche sowie der Abstand des Scheinwerfers vom Meßpunkt der Karosserie konstant sind, kann mittels eines derartigen Achssensors mit relativ geringem Aufwand die Anbauhöhe der Scheinwerfer ermittelt werden.

Andere Ausführungen von Abstandsmeßsensoren, welche geeignet sind den Abstand zwischen der Karosserie und dem Untergrund hinreichend schnell und hinreichend genau zu ermitteln, können ebenfalls verwendet werden.

Das erfindungsgemäße Verfahren sowie eine Leuchtweitenregelungseinrichtung werden im folgenden unter Bezugnahme auf die beigefügte Zeichnung näher erläutert. Im einzelnen zeigt hierzu:

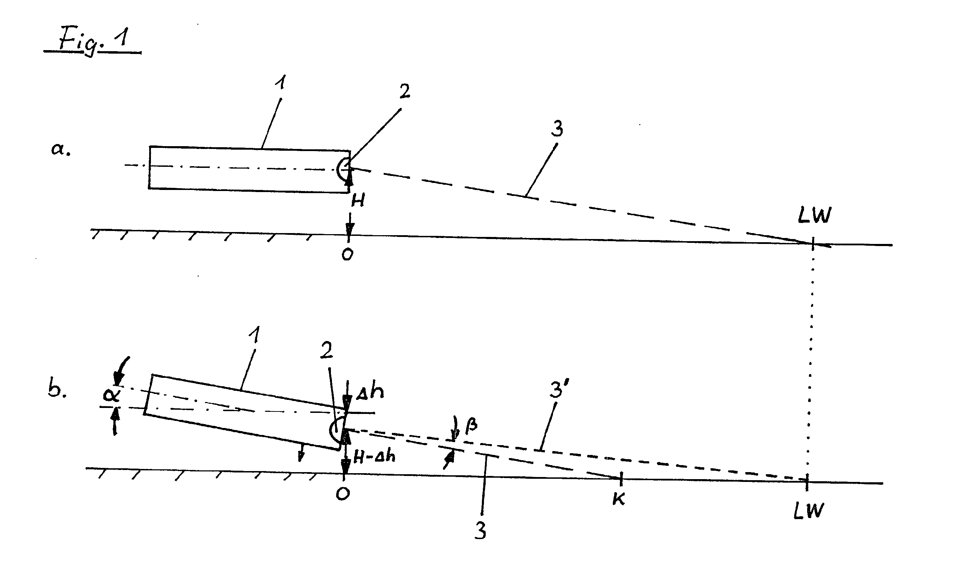

- Fig. 1: eine schematische Darstellung der Beleuchtungssituation eines Kraftfahrzeugs bei einer Karosserieneigung.

In der Darstellung von Fig. 1a ist schematisch die Beleuchtungssituation bei einem Kraftfahrzeug im Ruhezustand bzw. bei gleichmäßiger Geschwindigkeit dargestellt und in Fig. 1b bei einer Vollbremsung.

Mit dem Bezugszeichen 1 ist eine Fahrzeugkarosserie bezeichnet, die vorne, also in der Darstellung rechts Scheinwerfer 2 aufweist.

Der in Fig. 1 dargestellte Zustand entspricht einem stillstehenden oder sich mit gleichmäßiger Fahrt vorwärtsbewegenden Fahrzeug, bei dem sich die Scheinwerfer 2 mit der Anbauhöhe H oberhalb der Fahrbahnoberfläche befinden. Durch die vorgegebene Winkelstellung strahlen die Scheinwerfer 2 den Lichtkegel 3, der gestrichelt eingezeichnet ist, mit einer Leuchtweite LW ab.

Die Situation bei einer Vollbremsung ist in Fig. 1b dargestellt. Aufgrund der wirkenden Bremsmomente neigt sich die Karosserie 1 um eine Fahrzeugquerachse um einen Karosserieneigungswinkel (Nickwinkel) α nach vorn.

Durch eine konventionelle Leuchtweitenregelungseinrichtung, wie sie im Stand der Technik bekannt ist, würde der Karosserieneigungswinkel erkannt und eine Winkelverstellung -α der Scheinwerfer 2 um eine Verstellachse quer zum Fahrzeug vorgenommen, so daß der Lichtkegel 3 unter dem selben Winkel auf die Fahrbahnoberfläche abgestrahlt würde, wie im Ruhezustand oder im unbeschleunigten Fahrzustand gemäß Fig. 1a. Diese Abstrahlung des Lichtbündels 3 unter dem gleichen Winkel ist sowohl in Fig. 1a als auch in Fig. 1 b mit dem Bezugszeichen 3 versehen. In Fig. 1b ist jedoch deutlich erkennbar, daß dieses Lichtbündel 3 mit verkürzter Leuchtweite, nämlich am Punkt K auf die Fahrbahnoberfläche auftreffen würde. Dieser Effekt kommt dadurch zustande, daß nicht nur eine Karosserieneigung um den Nickwinkel α erfolgt, sondern der Scheinwerfer 2 zusätzlich um eine Höhendifferenz Δh senkrecht nach unten auf die Fahrbahnoberfläche zu bewegt wird. Dadurch ist die wirksame Anbauhöhe der Scheinwerfer 2 lediglich (H - Δh), was zu einer unerwünschten Verkürzung der Leuchtweite führt.

Das erfindungsgemäße Leuchtweitenregelungsverfahren sieht nun vor, daß mittels geeigneter Anbauhöhensensoren, die im einzelnen hier nicht dargestellt sind, die veränderte Anbauhöhe H - Δh bzw. die Anbauhöhenveränderung Δh gemessen wird und in die Winkelverstellung der Scheinwerfer 2 mit einbezogen wird. In dem dargestellten Beispiel wird durch eine entsprechende Anpassung des Sollwerts eine zusätzliche Winkelverstellung β der Scheinwerfer 2 vorgenommen, und zwar ebenfalls entgegen der Neigungsrichtung, so daß die unerwünschte Verkürzung der Leuchtweite durch die Verringerung der Anbauhöhe kompensiert wird. Das erfindungsgemäß korrigiert abgestrahlte Lichtbündel ist mit dem Bezugszeichen 3' versehen und kürzer gestrichelt eingezeichnet. Fig. 1b ist deutlich entnehmbar, daß das gemäß dem erfindungsgemäßen Verfahren korrigierte Lichtbündel 3' ungeachtet der Vollbremsung und der damit verbundenen Karosserieneigung mit der ursprünglichen Leuchtweite LW auf der Fahrbahnoberfläche auftrifft.

Entsprechend erfolgt eine Korrektur, wenn das Fahrzeug extrem beschleunigt wird und die Anbauhöhe H um eine Anbauhöhendifferenz Δh vergrößert wird, was bei einer konventionellen Leuchtweitenregelung eine Blendung des Gegenverkehrs zur Folge haben könnte.

Anhand der Darstellungen ist deutlich erkennbar, daß dank der erfindungsgemäßen Berücksichtigung der bei einer Karosserieneigung auftretenden Anbauhöhendifferenz Δh eine verbesserte Regelcharakteristik im Hinblick auf eine möglichst gleichbleibende Leuchtweite LW realisiert wird. Dies bedeutet einen erheblichen Sicherheitsgewinn, da Sichtweiteverluste und Blendungseffekte weitgehend vermieden werden können.

## Patentansprüche

1. Verfahren zur Leuchtweitenregelung der Scheinwerfer eines Kraftfahrzeugs, bei dem die Karosserieneigung des Fahrzeugs relativ zur Fahrbahn erfaßt wird und die Scheinwerfer zur Regelung der Leuchtweite entgegen des gemessenen Karosserieneigungswinkels relativ zur Karosserie winkelverstellt werden, **dadurch gekennzeichnet, daß** die bei einer Karosserieneigung auftretende Änderung der Anbauhöhe (Δh) der Scheinwerfer (2) relativ zur Fahrbahnoberfläche erfaßt wird und die Scheinwerfer (2) in Abhängigkeit von dem Anbauhöhenmeßwert (H - Δh) relativ zur Karosserie winkelverstellt werden.

2. Verfahren nach Anspruch 1, **dadurch gekennzeichnet, daß** der Anbauhöhenmeßwert (H) mit einer Anbauhöhenmeßeinrichtung gemessen wird.

3. Verfahren nach Anspruch 2, **dadurch gekennzeichnet, daß** die Anbauhöhenmeßeinrichtung einen Achssensor umfaßt.

4. Verfahren nach einem der Ansprüche 1 bis 3, **dadurch gekennzeichnet, daß** aus dem Anbauhöhenmeßwert ein Korrekturwert (β) für die Sollwertberechnung der Winkelverstellung (α + β) der Scheinwerfer (2) gebildet wird.

5. Einrichtung zur Regelung der Leuchtweite von Scheinwerfern eines Kraftfahrzeugs, mit Sensoreinrichtungen zur Messung des Karosserieneigungswinkels relativ zur Fahrbahn, Steuereinrichtungen zur Sollwertberechnung der Winkelverstellung der Scheinwerfer in Abhängigkeit von den Sensormeßwerten, und Scheinwerferstelleinrichtungen, von denen die Scheinwerfer auf die von den Steuereinrichtungen berechneten Sollwert der relativ zur Karosserie Winkel verstellbar sind, **dadurch gekennzeichnet, daß** die Sensoreinrichtungen eine Anbauhöhenmeßeinrichtung umfassen, mit der die Anbauhöhe (H, H - Δh) der Scheinwerfer (2) über der Fahrbahnoberfläche meßbar ist, wobei die Steuereinrichtung mit der Anbauhöhenmeßeinrichtung verbunden sind und die gemessene Anbauhöhe zusätzlich in den Sollwert der Winkelverstellung (α + β) der Scheinwerfer (2) einbeziehbar ist.

6. Einrichtung nach Anspruch 5, **dadurch gekennzeichnet, daß** die Anbauhöhenmeßeinrichtung einen Achssensor umfaßt, von den der vertikale Abstand zwischen Karosserie (2) und Fahrzeugachse meßbar ist.
